# EUROPEAN PATENT SPECIFICATION

(11) **EP 3 113 657 B1**
(45) Date of publication and mention of the grant of the patent: **25.04.2018**
(21) Application number: 15707914.6
(22) Date of filing: 26.02.2015
(51) Int. Cl.: A47J 27/62, A47J 43/04

(54) **A METHOD OF CONTROLLING A HEATING UNIT OF A COOKING DEVICE, A COOKING DEVICE AND A SOYBEAN MILK MAKER**
VERFAHREN ZUR STEUERUNG EINER HEIZEINHEIT EINER KOCHVORRICHTUNG, KOCHVORRICHTUNG UND SOJABOHNENMILCHBEREITER
PROCÉDÉ POUR COMMANDER UNE UNITÉ DE CHAUFFAGE D'UN APPAREIL DE CUISSON, DISPOSITIF DE CUISSON ET DISPOSITIF DE PRÉPARATION DE LAIT DE SOJA

(30) Priority: 07.03.2014 WO PCT/CN2014/073048; 31.03.2014 EP 14162696
(43) Date of publication of application: 11.01.2017
(73) Proprietor: Koninklijke Philips N.V., 5656 AE Eindhoven (NL)
(72) Inventor: LI, Mo, NL-5656 AE Eindhoven (NL); KUI, Xiaoyun, NL-5656 AE Eindhoven (NL); XUE, Fei, NL-5656 AE Eindhoven (NL)
(74) Representative: Freeke, Arnold
(86) International application number: PCT/EP2015/054083
(87) International publication number: WO 2015/132136

(56) References cited:
- EP-A1- 2 425 751
- EP-A2- 1 782 717
- WO-A1-2013/000790
- CN-U- 202 858 803
- DE-U1-202005 013 732
- JP-A- 2006 130 086

## Description

### TECHNICAL FIELD

Embodiments of the present disclosure generally relate to food cooking, and more particularly to a method of controlling a heating unit of a cooking device, a cooking device and a soybean milk maker.

### BACKGROUND

Nowadays, kitchen appliances such as rice cookers, soybean milk makers, etc., are more and more common in people's homes. Particularly, soybean milk, which contains a high concentrations of proteins and bioactive compounds valuable for human health, is one of the most popular and nutritious drinks and thus is quite popular with people, especially in China. Thus, soymilk makers are widely used in Chinese kitchens.

However, the soybean milk maker has an overflow problem, which is serious especially when the boiling point is reached, since the soymilk contains a high protein concentration which will generate a lot of foam. Thus, normally, an anti-overflow sensor is installed in the soymilk maker. When the foam rises quickly to the position where the anti-overflow sensor is provided, the heating unit for heating the liquid will be shut down; on the other hand, when the foam has descended, the heating unit will start working again. It will be understood by the skilled person that 'overflowing' in this context has the same meaning as e.g. the terms 'boiling over' and 'spilling over' and indicates the general condition that a mixture starts to increase in volume such that it no longer fits in the container holding it. Generally, overflowing is considered a negative condition as it requires additional cleaning by the person using the cooking device, and it may cause safety issues and valuable food is wasted.

In addition to the anti-overflow sensor, another temperature sensor is also arranged in the soybean milk maker to prevent the soybean milk from overflowing. Particularly, when the temperature is over 80 degrees Centigrade, the heating unit can only use 20∼30% of the total power for heating to prevent the risk of overflow, which would have occurred even if the the anti-overflow sensor had stopped the operation of the heating unit.

Therefore, the anti-overflow solution of the prior art requires both an anti-overflow sensor and a temperature sensor to prevent overflow, which means a complex and uneconomic structure.

WO 2013/000790 A1 discloses a cooking device for processing food by means of the sous-vide technique. For that, food is vacuumed in a sealed bag and placed into a water filled cooking chamber to be heated. It is essential for the sous-vide technique to work properly that the bag remains sealed for the whole heating period. If there is a leakage, even a small and for the eye not visible one, the cooking process will fail. D1, therefore, suggests arranging a conductivity sensor with in the heating chamber to continuously measure the conductivity of the water. In case substances, such as spices or salt, leak from the sealed bag into the water, the conductive of the water will increase and indicate that the bag of food is unsealed. On such indication an alarm to the user is triggered and the cooking terminated.

### SUMMARY

To this end, in the present disclosure, there is provided a solution with respect to heating control so as to obviate or at least partially mitigate at least part of the abovementioned problems.

In a first aspect of the present disclosure, there is provided a method of controlling a heating unit of a cooking device. The method comprises: detecting a conductive property of a mixture of water and food, wherein the conductive property of the mixture indicates a degree of overflow risk of the mixture; and sending a control signal with regard to the heating unit for heating the mixture based on the detected conductive property of the mixture to control the operation of the heating unit, wherein the sending of a control signal to the heating unit comprises sending a pause signal to shut down the heating unit temporarily when the conductive property of the mixture indicates a risk of overflow, wherein the risk of overflow is indicated when the conductive property of the mixture reaches a downward inflection point, i.e. changes from increasing to decreasing.

In a second aspect of the present disclosure, there is provided a cooking device. The cooking device comprises: a heating unit configured to heat a mixture of water and food, a detector configured to detect a conductive property of the mixture of water and food, wherein the conductive property of the mixture indicates a degree of overflow risk; and a controller configured to send a control signal with regard to the heating unit for heating the mixture based on the detected conductive property of the mixture to control the operation of the heating unit, wherein the controller is further configured to send a pause signal to shut down the heating unit temporarily when the conductive property of the mixture indicates a risk of overflow, wherein the risk of overflow is indicated when the conductive property of the mixture reaches a downward inflection point, i.e. changes from increasing to decreasing.

In a third aspect of the present disclosure, there is further provided a soybean milk maker. The soybean milk maker may comprise: a cup body; a head capping the cup body, the head including a cutter, a cutter shaft, a motor, a controller and a heating unit for heating the mixture of water and beans; and a device according to the first aspect of the present disclosure.

With embodiments of the present disclosure, the overflow problem can be solved efficiently at low cost, the structure of the cooking device may be greatly simplified and at the same time the temperature will remain close to the boiling point, which means that the heating process is efficient.

Other features and advantages of embodiments of the present disclosure will also be apparent from the following description of specific embodiments when read in conjunction with the accompanying drawings, which illustrate, by way of example, the principles of embodiments of the present disclosure.

### BRIEF DESCRIPTION OF THE DRAWINGS

Embodiments of the disclosure are presented by way of examples and their advantages are explained in greater detail below, with reference to the accompanying drawings throughout which like reference numbers represent same or similar components and wherein:
Fig. 1 schematically illustrates a method of controlling a heating unit of a cooking device according to an embodiment of the present disclosure;
Fig. 2 schematically illustrates the change in current with respect to fluid food over time according to an embodiment of the present disclosure;
Fig. 3 schematically illustrates a flowchart of a soybean milk making process according to an embodiment of the present disclosure;
Fig. 4 schematically illustrates a block diagram of an exemplary cooking device according to an embodiment of the present disclosure; and
Fig. 5 schematically illustrates a schematic block diagram of an exemplary soybean milk maker according to an embodiment of the present disclosure.

### DETAILED DESCRIPTION OF EMBODIMENTS

Hereinafter, embodiments of the present disclosure will be described in detail with reference to the accompanying drawings. It should be appreciated that, although the specification contains many specific implementation details, these details should not be construed as limitations of the scope of any invention or of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Generally, all terms used in the claims are to be interpreted according to their ordinary meaning in the technical field, unless explicitly defined otherwise herein. All references to "a/an/the/said [element, device, component, means, step, etc]" are to be interpreted openly as referring to at least one instance of said element, device, component, means, unit, step, etc., without excluding a plurality of such devices, components, means, units, steps, etc., unless explicitly stated otherwise.

It should be appreciated that hereinafter, for the purpose of illustration, the soybean milk making will be taken as an example of cooking food; however, the present disclosure is not only limited to soybean milk making, and the present disclosure is also applicable to other kinds of food, such as the cooking of rice, congee, soup etc.

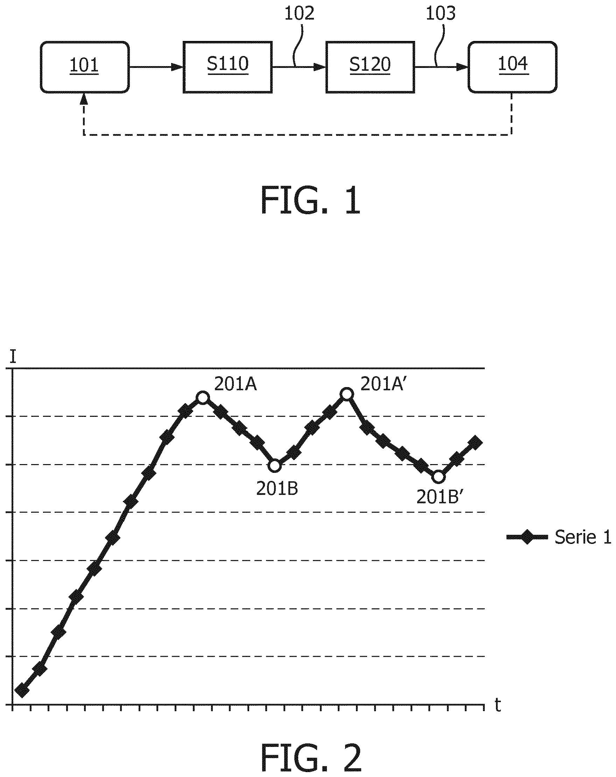

Hereinafter, reference will be made first to Figs. 1 to 2 to describe a method of controlling a heating unit of a cooking device according to an embodiment of the present disclosure.

Reference is first made to Fig. 1, which illustrates a method of controlling a heating unit of a cooking device according to an embodiment of the present disclosure. As illustrated, first at step S110, the conductive property 102 of a mixture 101 of water and food is detected. The conductive property 102 of the mixture is used as an indicator for representing a degree of overflow risk of the mixture 101.

The inventors note that the mixture 101, such as soybean milk, may be considered a liquid conductor and its conductivity increases linearly during heating before the temperature reaches the mixture's boiling point. When the mixture starts boiling, proteins contained therein cause the liquid surface to start to roll; a huge amount of air will be mixed with the liquid which causes foam generation. During this period, the conductivity of the mixture will decrease quickly due to it mixing with air. In view of this, the inventors found that the conductive property may be used as an indicator to indicate a degree of overflow risk of the mixture 101 to control the heating unit.

To detect the conductive property of the mixture, it is necessary to provide a detector which can detect the conductivity of the mixture. As the simplest design, two electrodes are added to the soymilk maker, to which a voltage is applied. When the temperature of the liquid rises during heating, the current generated by the voltage will increase accordingly, and when foam is generated the current will decrease substantially due to the decrease in conductivity. On the other hand, when the foam disappears, the conductivity of the mixture will increase immediately and thus the current will increase. Thus, the increase of the current relates to the increase in temperature of the liquid during the heating process before the boiling point is reached; the abrupt decrease of the current may represent the generation of foam; and the sudden increase of the current may represent the disappearance of the foam. That is to say, by detecting the current change by means of a current detector, it is possible to know the degree of overflow risk of the mixture and control a cooking device such as to at least reduce, if not eliminate, this risk.

Especially, currently, the use of heating electrode technology is becoming more and more popular in electrical cooking devices. For such applications, the heating electrodes will be supplied with a low voltage (such as 20V AC) and thus these electrodes may be used as the electrodes for detecting the conductive property of the mixture, which means that there is no need any more to use additional electrodes.

Then, at step S120, a control signal 103 may be sent with regard to the heating unit 104 for heating the mixture 101 based on the detected conductive property 102 of the mixture 101 to control the operation of the heating unit 104.

Based on the detected conductive property, it is possible to find out the degree of overflow risk of the mixture. For example, during the process where the current increases linearly, it is indicated that the temperature is constantly increasing and that it has not reached the boiling point of the mixture yet. On the other hand, if the detected current stops increasing and begins to decrease instead, i.e., the conductive property of the mixture reaches a downward inflection point, it is indicated that foam is generated and that there is a risk of overflow. In such a case, a pause signal may be sent to shut down the heating unit 104 temporarily so as to avoid a potential overflow. Shortly after the beginning of the heating pause, the foam will stop increasing and starts to disappear instead. When substantially all foam has vanished, the conductivity of the mixture will start to increase suddenly, i.e., the conductive property of the mixture reaches an upward inflection point, which means that the current will start to increase immediately. At this point, the risk of overflow has been avoided and thus the control may be based on the detected upward inflection point and send a restart signal to turn on the heating unit (104) again.

For the purpose of illustration, Fig. 2 schematically illustrates the change in current with respect to fluid food over time during soybean milk making according to an embodiment of the present disclosure. As illustrated, at point 201A, the current reaches its top value, i.e. at this point foam generation starts. The detector detects that the current starts dropping and a heating pause is made. Due to heat inertia, the foam may increase for a short period and the current continues to decrease. However, when the foam begins to decrease, it will disappear very soon and then the current will stop decreasing and instead starts to increase again, i.e., the current reaches its upward inflection point 210B. At this point, heating is restarted and the current will increase again. After that, a heating pause will be made at point 201A' and heating will be restarted at 201B'. The process may be repeated until the cooking process is completed.

Thus, in embodiments of the present disclosure, most of the time, the mixture is substantially controlled in a status where there is a small amount of foam but without a real risk of overflow, which means the temperature will remain close to the boiling point. That is to say, the overflow problem can be solved efficiently and, at the same time, efficient control and heating can be achieved. Moreover, compared to the prior art, the present disclosure may address the overflow problem at low cost, and the structure of the cooking device may be greatly simplified.

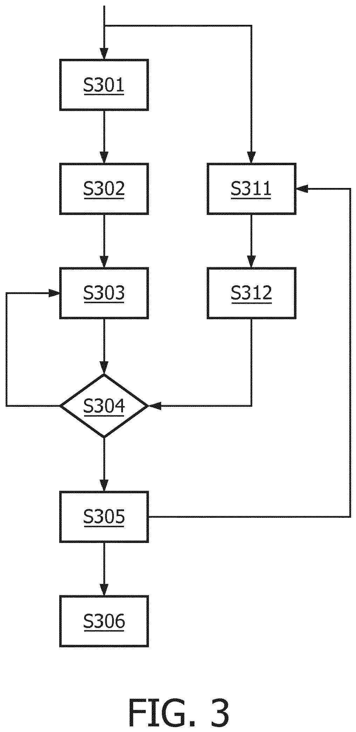

Fig. 3 illustrates a flowchart of a soybean milk making process according to an embodiment of the present disclosure. As illustrated in Fig. 3, first, at step S301, the process starts by heating water. Then, at step S302, when the water reaches a predetermined temperature, such as about 70 degrees, the bean-grinding operation starts. After that, at step S303, heating is continued. At the same time, when the soybean milk maker is switched on, a current detection system is switched on as well at step S311, and if it detects a current inflection point at step S312, then, at step S304, it determines whether to indicate a risk of soybean milk overflow or not. If the detected current change indicates a risk of overflow, then, at step S305, a heating pause is made to wait until the current detector detects another inflection point which might restart the heating step. If, at step S304, it is determined that the detected current change indicates no risk of overflow, the process proceeds with step S303, and heating is continued. At the same time, a timer will be used to control the time of cooking. After expiration of the cooking time at step S306, the soybean making process will be ended.

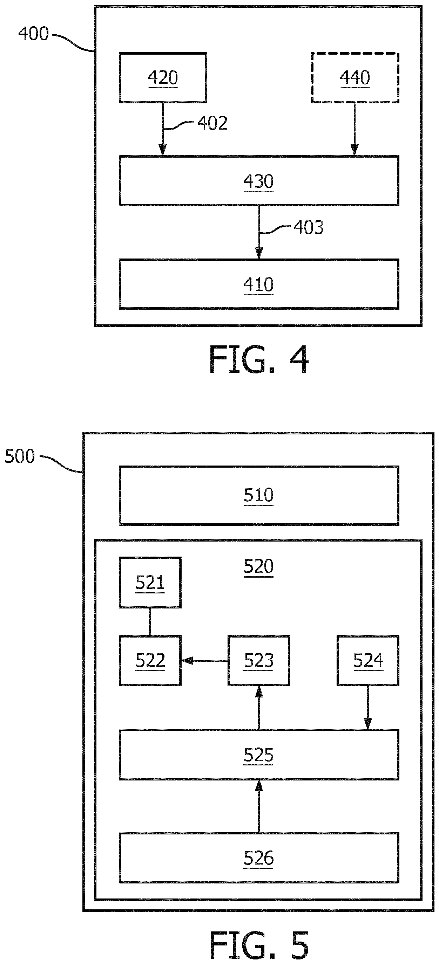

Next, reference is made to Fig. 4 to describe a cooking device according to an embodiment of the present disclosure. As illustrated, the cooking device 400 may comprise a heating unit 410, a detector 420, and a controller 430. The heating unit 410 is configured to heat the mixture of food and liquid, i.e., the fluid food, under the control of the controller 430. The detector 420 is configured to detect the conductive property 402 of the mixture of water and food. Herein, the conductive property 420 of the mixture indicates a degree of overflow risk. The detector 420 may comprise two electrodes and a current detector. The two electrodes are designed to be inserted into the mixture, and a voltage will be supplied and the current detector will be used to sense the current of the mixture. The two electrodes may be newly added electrodes which are specifically designed for detecting a conductive property. Or, alternatively, in the case that the cooking device is based on the electrode heating technology, the two electrodes may be heating electrodes of the heating unit 410.

In embodiments of the present disclosure, the risk of overflow may be indicated when the conductive property of the mixture reaches a downward inflection point. In such a case, the controller 430 may be configured to send a pause signal to shut down the heating unit 410 temporarily. Besides, no risk of overflow is indicated when the conductive property of the mixture reaches an upward inflection point. Accordingly, the controller 430 may be further configured to send a restart signal to turn on the heating unit again when the conductive property of the mixture indicates no risk of overflow.

Besides, the cooking device 400 may further comprise a timer 440 to control the time of cooking. The timer 440 may be used to control the duration of the cooking step.

In embodiments of the present disclosure, the cooking device 400 may be a rice cooker, a soup & congee cooker, a soybean milk maker or any other cooking device that requires anti-overflow means during cooking.

Particularly, in embodiments of the present disclosure, there is further provided a soybean milk maker which will be described with reference to Fig. 5.

As illustrated, a soybean milk maker 500 comprises a cup body 510 and a head 520 capping the cup body 510. The cup body 510 is used to receive water and beans or the soybean milk made therefrom. The head 520 caps the cup body 510 and usually includes a cutter 521, a cutter shaft 522, a motor 523, a heating unit 524 and a controller 525 for heating the mixture of water and beans. Especially, the soybean milk maker 500 further comprises a detector 526 that is configured to detect a conductive property of a mixture of water and beans. The conductive property of the mixture indicates a degree of overflow risk. The controller 525 is further configured to send a control signal with regard to the heating unit 524 for heating the mixture based on the detected conductive property of the mixture to control the operation of the heating unit 524.

Particularly, the controller 525 may be further configured to send a pause signal to shut down the heating unit temporarily when the conductive property of the mixture indicates a risk of overflow. Especially, the risk of overflow may be indicated when the conductive property of the mixture reaches a downward inflection point, i.e. starts decreasing.

On the other hand, the controller 525 may also be further configured to send a restart signal to turn on the heating unit again when the conductive property of the mixture indicates no risk of overflow. The conductive property of the mixture indicates no risk of overflow when the conductive property of the mixture reaches an upward inflection point, i.e. starts increasing again.

The conductive property may be detected by means of a current detector and two electrodes designed to be inserted into the mixture. In an embodiment of the present disclosure, the two electrodes may be heating electrodes of the heating unit which extend from the head; or alternatively the electrodes may be specially designed to detect the conductive property.

With embodiments of the present disclosure, the overflow problem in cooking devices, particularly in soybean milk makers, can be solved efficiently at low cost, the structure of the cooking device can be greatly simplified and at the same time the temperature will remain close to the boiling point, which means that the heating process is efficient.

Hereinabove, specific embodiments of the present disclosure have been described to make those skilled in the art fully understand the spirit of the present disclosure; however, the present disclosure is not limited thereto. As a matter of fact, embodiments of the present disclosure may be implemented without (part of) these specific details. As an example, the controller may determine to restart the heating step based on, for example, the duration of the heating pause instead of on the detected conductive property; or alternatively, the heating step may be paused based on factors(such as the liquid level of the mixture) other than the detected conductive property.

Therefore, it is to be understood that the embodiments of the disclosure are given only for the purpose of illustration and the present disclosure is not to be limited to the specific embodiments disclosed herein. Modifications and other possible embodiments are intended to be included within the scope of the appended claims.

## Claims

1. A method of controlling a heating unit (104) of a cooking device, comprising:
detecting (S110) a conductive property (102) of a mixture (101) of water and food, wherein the conductive property (102) of the mixture indicates a degree of overflow risk of the mixture (101); and
sending (SI20) a control signal (103) to the heating unit (104) for heating the mixture (101) based on the detected conductive property (102) of the mixture (101) to control the operation of the heating unit (104), **characterized in that** sending (SI20) a control signal (103) to the heating unit (104) comprises:
sending a pause signal to shut down the heating unit (104) temporarily when the conductive property (102) of the mixture indicates a risk of overflow, wherein the conductive property of the mixture indicates a risk of overflow when the conductive property of the mixture reaches a downward inflection point (201A, 201A'), i.e. changes from increasing to decreasing.

2. The method according to Claim 1, wherein sending (SI20) a control signal (103) to the heating unit (104) comprises
sending a restart signal to turn on the heating unit (104) when the conductive property (102) of the mixture indicates no risk of overflow, wherein the conductive property of the mixture indicates no risk of overflow when the conductive property of the mixture reaches an upward inflection point (201B, 201B'), i.e. changes from decreasing to increasing.

3. The method according to any one of Claims 1 to 2, wherein the conductive property (103) of the mixture is detected by means of a current detector and two electrodes designed to be inserted into the mixture.

4. The method according to Claim 3, wherein the two electrodes are heating electrodes of the heating unit (104).

5. A cooking device (400), comprising:
a heating unit (410) configured to heat a mixture of water and food,
a detector (420) configured to detect a conductive property (402) of the mixture of water and food, wherein the conductive property (402) of the mixture indicates a degree of overflow risk; and
a controller (430) configured to send a control signal (403) to the heating unit (410) for heating the mixture based on the detected conductive property (402) of the mixture to control the operation of the heating unit (410), **characterized in that** the controller (420) is further configured to:
send a pause signal to shut down the heating unit (410) temporarily when the conductive property (402) of the mixture indicates a risk of overflow, wherein the conductive property of the mixture indicates a risk of overflow when the conductive property (402) of the mixture reaches a downward inflection point (201A, 201A'), i.e. changes from increasing to decreasing.

6. The cooking device (400) according to Claim 5, wherein the controller (420) is further configured to:
send a restart signal to turn on the heating unit (410) when the conductive property (402) of the mixture indicates no risk of overflow, wherein the conductive property of the mixture indicates no risk of overflow when the conductive property (402) of the mixture reaches an upward inflection point (201B, 201B'), i.e. changes from decreasing to increasing.

7. The cooking device (400) according to any one of Claims 5 to 6, wherein the detector (410) comprises a current detector and two electrodes designed to be inserted into the mixture.

8. The cooking device (400) according to Claim 7, wherein the two electrodes are heating electrodes of the heating unit (410).

9. A soybean milk maker (500), comprising:
a cup body (510);
a head (520) capping the cup body (510), a cutter (521), a cutter shaft (522), a motor (523), and
a device according to claim 5.

10. The soybean milk maker (500) according to Claim 9, wherein the controller (525) is further configured to:
send a restart signal to turn on the heating unit (524) again when the conductive property of the mixture indicates no risk of overflow, wherein the conductive property of the mixture indicates no risk of overflow when the conductive property of the mixture reaches an upward inflection point (201B, 201B'), i.e. the conductive property changes from decreasing to increasing.

11. The soybean milk maker (500) according to any one of Claims 9 to 10, wherein the detector (526) comprises a current detector and two electrodes designed to be inserted into the mixture.

12. The soybean milk maker (500) according to Claim 11, wherein the two electrodes are heating electrodes of the heating unit (524) which extend from the head.

## Patentansprüche

1. Verfahren zum Steuern einer Heizeinheit (104) für eine Kochvorrichtung, umfassend:
Erfassen (S110) einer Leitfähigkeitseigenschaft (102) einer Mischung (101) aus Wasser und Lebensmitteln, wobei die Leitfähigkeitseigenschaft (102) der Mischung einen Grad des Überlaufrisikos der Mischung (101) angibt; und
Senden (S120) eines Steuersignals (103) an die Heizeinheit (104) zum Erwärmen der Mischung (101) basierend auf der erfassten Leitfähigkeitseigenschaft (102) der Mischung (101), um den Betrieb der Heizeinheit (104) zu steuern,
**dadurch gekennzeichnet, dass** das Senden (S120) eines Steuersignals (103) an die Heizeinheit (104) umfasst:
Senden eines Pausensignals zum vorübergehenden Abschalten der Heizeinheit (104), wenn die Leitfähigkeit (102) der Mischung ein Überlaufrisiko angibt, wobei die Leitfähigkeitseigenschaft der Mischung ein Überlaufrisiko anzeigt, wenn die Leitfähigkeitseigenschaft der Mischung einen rückläufigen Wendepunkt (201A, 201A') erreicht, d. h. von ansteigend zu abfallend wechselt.

2. Verfahren nach Anspruch 1, wobei das Senden (S120) eines Steuersignals (103) an die Heizeinheit (104) umfasst:
Senden eines Neustartsignals zum Einschalten der Heizeinheit (104), wenn die Leitfähigkeit (102) der Mischung kein Überlaufrisiko angibt, wobei die Leitfähigkeitseigenschaft der Mischung kein Überlaufrisiko anzeigt, wenn die Leitfähigkeitseigenschaft der Mischung einen steigenden Wendepunkt (201B, 201B') erreicht, d. h. von abfallend zu ansteigend wechselt.

3. Verfahren nach einem der Ansprüche 1 bis 2, wobei die Leitfähigkeitseigenschaft (103) der Mischung mittels eines Stromdetektors und zwei Elektroden erfasst wird, die dazu ausgestaltet sind, in die Mischung eingeführt zu werden.

4. Verfahren nach Anspruch 3, wobei die zwei Elektroden Heizelektroden der Heizeinheit (104) sind.

5. Kochvorrichtung (400), umfassend:
eine Heizeinheit (410), die zum Erwärmen einer Mischung aus Wasser und Lebensmitteln konfiguriert ist,
einen Detektor (420), der zum Erfassen einer Leitfähigkeitseigenschaft (402) der Mischung aus Wasser und Lebensmitteln konfiguriert ist, wobei die Leitfähigkeitseigenschaft (402) der Mischung einen Grad des Überlaufrisikos angibt; und
eine Steuerung (430), die zum Senden eines Steuersignals (403) an die Heizeinheit (410) zum Erwärmen der Mischung basierend auf der erfassten Leitfähigkeitseigenschaft (402) der Mischung konfiguriert ist, um den Betrieb der Heizeinheit (410) zu steuern, **dadurch gekennzeichnet, dass** die Steuerung (420) ferner konfiguriert ist zum:
Senden eines Pausensignals zum vorübergehenden Abschalten der Heizeinheit (410), wenn die Leitfähigkeit (402) der Mischung ein Überlaufrisiko angibt, wobei die Leitfähigkeitseigenschaft der Mischung ein Überlaufrisiko anzeigt, wenn die Leitfähigkeitseigenschaft (402) der Mischung einen rückläufigen Wendepunkt (201A, 201A') erreicht, d. h. von ansteigend zu abfallend wechselt.

6. Kochvorrichtung (400) nach Anspruch 5, wobei die Steuerung (420) ferner konfiguriert ist zum:
Senden eines Neustartsignals zum Einschalten der Heizeinheit (410), wenn die Leitfähigkeit (402) der Mischung kein Überlaufrisiko angibt, wobei die Leitfähigkeitseigenschaft (402) der Mischung kein Überlaufrisiko angibt, wenn die Leitfähigkeitseigenschaft der Mischung einen steigenden Wendepunkt (201B, 201B') erreicht, d. h. von abfallend zu ansteigend wechselt.

7. Kochvorrichtung (400) nach einem der Ansprüche 5 bis 6, wobei der Detektor (410) einen Stromdetektor und zwei Elektroden umfasst, die dazu ausgestaltet sind, in die Mischung eingeführt zu werden.

8. Kochvorrichtung (400) nach Anspruch 7, wobei die zwei Elektroden Heizelektroden der Heizeinheit (410) sind.

9. Sojabohnenmilchbereiter (500), umfassend:
einen Becherkörper (510);
einen Kopf (520), der den Becherkörper (510) bedeckt, eine Schneidvorrichtung (521), eine Schneidwelle (522), einen Motor (523) und eine Vorrichtung nach Anspruch 5.

10. Sojabohnenmilchbereiter (500) nach Anspruch 9, wobei die Steuerung (525) ferner konfiguriert ist zum:
Senden eines Neustartsignals zum erneuten Einschalten der Heizeinheit (524), wenn die Leitfähigkeit der Mischung kein Überlaufrisiko angibt, wobei die Leitfähigkeitseigenschaft der Mischung kein Überlaufrisiko anzeigt, wenn die Leitfähigkeitseigenschaft der Mischung einen steigenden Wendepunkt (201B, 201B') erreicht, d. h. die Leitfähigkeitseigenschaft von abfallend zu ansteigend wechselt.

11. Sojabohnenmilchbereiter (500) nach einem der Ansprüche 9 bis 10, wobei der Detektor (526) einen Stromdetektor und zwei Elektroden umfasst, die ausgestaltet sind, in die Mischung eingeführt zu werden.

12. Sojabohnenmilchbereiter (500) nach Anspruch 11, wobei die zwei Elektroden Heizelektroden der Heizeinheit (524) sind, die sich von dem Kopf erstrecken.

## Revendications

1. Procédé de commande d'une unité de chauffage (104) d'un dispositif de cuisson, comprenant :
la détection (S110) d'une propriété conductrice (102) d'un mélange (101) d'eau et d'aliments, dans lequel la propriété conductrice (102) du mélange indique un degré de risque de débordement du mélange (101) ; et
l'envoi (S120) d'un signal de commande (103) à l'unité de chauffage (104) pour chauffer le mélange (101) sur la base de la propriété conductrice détectée (102) du mélange (101) pour commander le fonctionnement de l'unité de chauffage (104),
**caractérisé en ce que** l'envoi (S120) d'un signal de commande (103) à l'unité de chauffage (104) comprend :
l'envoi d'un signal de pause pour arrêter l'unité de chauffage (104) temporairement lorsque la propriété conductrice (102) du mélange indique un risque de débordement, dans lequel la propriété conductrice du mélange indique un risque de débordement quand ladite propriété conductrice du mélange atteint un point d'inflexion vers le bas (201A, 201A'), à savoir qu'elle passe d'une augmentation à une diminution.

2. Procédé selon la revendication 1, dans lequel l'envoi (S120) d'un signal de commande (103) à l'unité de chauffage (104) comprend
l'envoi d'un signal de redémarrage pour allumer l'unité de chauffage (104) lorsque la propriété conductrice (102) du mélange n'indique aucun risque de débordement, dans lequel la propriété conductrice du mélange n'indique aucun risque de débordement lorsque ladite propriété conductrice du mélange atteint un point d'inflexion vers le haut (201B, 201B'), à savoir qu'elle passe d'une diminution à une augmentation.

3. Procédé selon l'une quelconque des revendications 1 à 2, dans lequel la propriété conductrice (103) du mélange est détectée au moyen d'un détecteur de courant et de deux électrodes conçues pour être insérées dans le mélange.

4. Procédé selon la revendication 3, dans lequel les deux électrodes sont des électrodes chauffantes de l'unité de chauffage (104).

5. Dispositif de cuisson (400) comprenant :
une unité de chauffage (410) configurée pour chauffer un mélange d'eau et d'aliments,
un détecteur (420) configuré pour détecter une propriété conductrice (402) du mélange d'eau et d'aliment, dans lequel la propriété conductrice (402) du mélange indique un degré de risque de débordement ; et
un dispositif de commande (430) configuré pour envoyer un signal de commande (403) à l'unité de chauffage (410) pour chauffer le mélange sur la base de la propriété conductrice détectée (402) du mélange pour commander le fonctionnement de l'unité de chauffage (410), **caractérisé en ce que** le système de commande (420) est en outre configuré pour :
envoyer un signal de pause pour arrêter l'unité de chauffage (410) temporairement lorsque la propriété conductrice (402) du mélange indique un risque de débordement, dans lequel la propriété conductrice du mélange indique un risque de débordement quand ladite propriété conductrice (402) du mélange atteint un point d'inflexion vers le bas (201A, 201A'), à savoir qu'elle passe d'une augmentation à une diminution.

6. Dispositif de cuisson (400) selon la revendication 5, dans lequel le dispositif de commande (420) est en outre configuré pour :
envoyer un signal de redémarrage pour allumer l'unité de chauffage (410) lorsque la propriété conductrice (402) du mélange n'indique aucun risque de débordement, dans lequel la propriété conductrice du mélange n'indique aucun risque de débordement lorsque ladite propriété conductrice (402) du mélange atteint un point d'inflexion vers le haut (201B, 201B'), à savoir qu'elle passe d'une diminution à une augmentation.

7. Dispositif de cuisson (400) selon l'une quelconque des revendications 5 à 6, dans lequel le détecteur (410) comprend un détecteur de courant et deux électrodes conçues pour être insérées dans le mélange.

8. Dispositif de cuisson (400) selon la revendication 7, dans lequel les deux électrodes sont des électrodes chauffantes de l'unité de chauffage (410).

9. Dispositif de préparation de lait de soja (500) comprenant :
un corps de tasse (510) ;
une tête (520) recouvrant le corps de tasse (510), un découpoir (521), un arbre de découpoir (522), un moteur (523), et un dispositif selon la revendication 5.

10. Dispositif de préparation de lait de soja (500) selon la revendication 9, dans lequel le dispositif de commande (525) est en outre configuré pour :
envoyer un signal de redémarrage pour rallumer l'unité de chauffage (524) lorsque la propriété conductrice du mélange n'indique aucun risque de débordement, dans lequel la propriété conductrice du mélange n'indique aucun risque de débordement lorsque ladite propriété conductrice du mélange atteint un point d'inflexion vers le haut (201B, 201B'), à savoir la propriété conductrice passe d'une diminution à une augmentation.

11. Dispositif de préparation de lait de soja (500) selon l'une quelconque des revendications 9 à 10, dans lequel le détecteur (526) comprend un détecteur de courant et deux électrodes conçues pour être insérées dans le mélange.

12. Dispositif de préparation de lait de soja (500) selon la revendication 11, dans lequel les deux électrodes sont des électrodes chauffantes de l'unité de chauffage (524) qui s'étendent depuis la tête.
